# EUROPEAN PATENT SPECIFICATION

(11) **EP 3 636 454 B1**
(45) Date of publication and mention of the grant of the patent: **04.11.2020**
(21) Application number: 19200693.0
(22) Date of filing: 01.10.2019
(51) Int. Cl.: B60C 9/22

(54) **TIRE**
REIFEN
PNEUMATIQUE

(30) Priority: 03.10.2018 JP 2018188278
(43) Date of publication of application: 15.04.2020
(73) Proprietor: SUMITOMO RUBBER INDUSTRIES, LTD., Kobe-shi, Hyogo 651-0072 (JP)
(72) Inventor: MAMI, Monji, Kobe-shi, Hyogo 651-0072 (JP)
(74) Representative: TBK

(56) References cited:
- EP-A2- 2 657 047
- WO-A1-2018/051763
- WO-A1-2018/123685
- JP-A- H05 162 509
- JP-A- 2012 116 246
- US-A1- 2018 056 721

## Description

### BACKGROUND OF THE INVENTION

### Field of the Invention

The present invention relates to a tire having a band layer in a tread portion.

### Description of the Background Art

Japanese Laid-Open Patent Publication No. 2016-68671 discloses a tire having a carcass, a belt, and a band. The carcass is extended on and between beads on both sides. The belt is disposed radially inward of a tread and stacked over the carcass. The band is disposed radially outward of the belt. The band is formed by a tape including cords and topping rubber being helically wound almost in the circumferential direction. The band includes gaps between adjacent portions of the tape.

In such a tire, the band prevents lifting of the belt caused by a centrifugal force during running. The band includes the gaps, and thus allows the number of cords to be reduced as compared to a conventional tire. Therefore, generation of a flat spot due to the cords is inhibited. Accordingly, this kind of tire has excellent high-speed durability performance and flat spot resistance performance. The "flat spot" represents a phenomenon that, for example, the cords in which heat has been generated due to running are cooled and contracted by the running being stopped, and the deformation of the cords becomes fixed. The tire in which such a flat spot has occurred causes vibration during running to degrade ride comfort.

JP 2012 116246 A relates to a pneumatic tire including a carcass, a belt layer arranged outside the carcass, a band layer having a band cord arranged outside the belt layer and arranged at an angle of 5 degrees or less to the tire circumferential direction, and tread rubber arranged outside the band layer. The tread rubber includes a high modulus part arranged in a shoulder area and made of a rubber material having a large modulus, and a low modulus part adjacent in the tread width direction to the high modulus part and made of a rubber material smaller in a modulus than the high modulus part. The band layer includes a low density part arranged inside the high modulus part and small in arrangement density of the band cord, and a high density part arranged inside the low modulus part and larger in the arrangement density of the band cord than the low density part.

WO 2018/051763 A1 and WO 2018/123685 A1 relate to similar tires.

### SUMMARY OF THE INVENTION

However, in recent years, further improvement of high-speed durability performance and flat spot resistance performance is required.

The present invention has been made in view of the aforementioned circumstances, and a main object of the present invention is to provide a tire that allows high-speed durability performance and flat spot resistance performance to be improved in a well-balanced manner.

This object is solved by a tire according to claim 1. Advantageous developments are subject-matters of the dependent claims. The respective tire includes: a carcass having a toroidal shape; a belt layer disposed inward of a tread portion and outward of the carcass in a tire radial direction; and a band layer disposed inward of the tread portion and outward of the belt layer in the tire radial direction. The band layer is formed by helically winding a band ply in which at least one band cord is covered with topping rubber, and the band layer includes a gap over which side edges, of the band ply, adjacent to each other in a tire axial direction are spaced from each other. The band layer includes a crown portion that includes a tire equator, and a pair of shoulder portions disposed outward of both outer sides of the crown portion. A width, in the tire axial direction, of the gap in the crown portion is less than a width, in the tire axial direction, of the gap in the shoulder portions.

In the tire according to the present invention, the band layer has end portions that are disposed outward of both outer sides of the paired shoulder portions, and that cover outer ends of the belt layer in the tire axial direction, and the end portions are wound such that adjacent portions, in the tire axial direction, of the band ply are in contact with each other.

In the tire according to the present invention, a width of each end portion in the tire axial direction is preferably greater than 20 mm.

In the tire according to the present invention, the width, in the tire axial direction, of the gap in the crown portion is preferably 1.5% to 5% of a tread width.

In the tire according to the present invention, the width, in the tire axial direction, of the gap in the shoulder portions is preferably greater than 5% of the tread width and not greater than 10% of the tread width.

In the tire according to the present invention, on a tread ground-contact surface in a normal load applied state in which the tire is mounted on a normal rim, the tire is inflated to a normal internal pressure, and the tire is in contact with a flat surface at a camber angle of 0 degrees under a normal load, an area of the band layer in the tread ground-contact surface is preferably 60% to 85% of an area of the belt layer in the tread ground-contact surface.

The tire of the present invention includes a belt layer, and a band layer disposed outward of the belt layer in the tire radial direction. The band layer is formed by a band ply being helically wound, and the band layer includes a gap over which side edges, of the band ply, adjacent to each other in the tire axial direction are spaced from each other.

In general, a portion near the tire equator is more likely to project outward in the tire radial direction due to a centrifugal force during running, as compared to shoulder portions disposed outward of the portion near the tire equator in the tire axial direction. That is, during the running, lifting of the belt layer tends to be increased near the tire equator. Therefore, the width of the gap in the tire axial direction at the crown portion of the band layer is made smaller than that at the shoulder portions of the band layer, whereby a holding force is relatively increased to inhibit the lifting near the tire equator.

Furthermore, in general, during cornering, a higher lateral force acts on the shoulder portions than on the portion near the tire equator. Therefore, the shoulder portion is deformed more greatly than the portion near the tire equator, and heat generation in the band cord of the band ply tends to be increased. Therefore, the width of the gap at the shoulder portions of the band layer is made greater than the width of the gap at the crown portion of the band layer, whereby the number of the band cords can be relatively reduced to inhibit the heat generation in the band cords.

Accordingly, the tire of the present invention allows high-speed durability performance and flat spot resistance performance to be improved in a well-balanced manner.

### BRIEF DESCRIPTION OF THE DRAWINGS

FIG. 1 is a tire meridian cross-sectional view of a pneumatic tire according to one embodiment of the present invention;
FIG. 2 is a perspective view of a band ply;
FIG. 3 is an enlarged view of a tread portion shown in FIG. 1; and
FIG. 4 is an enlarged view of a bead portion shown in FIG. 1.

### DESCRIPTION OF THE PREFERRED EMBODIMENTS

An embodiment of the present invention will be described below with reference to the drawings.

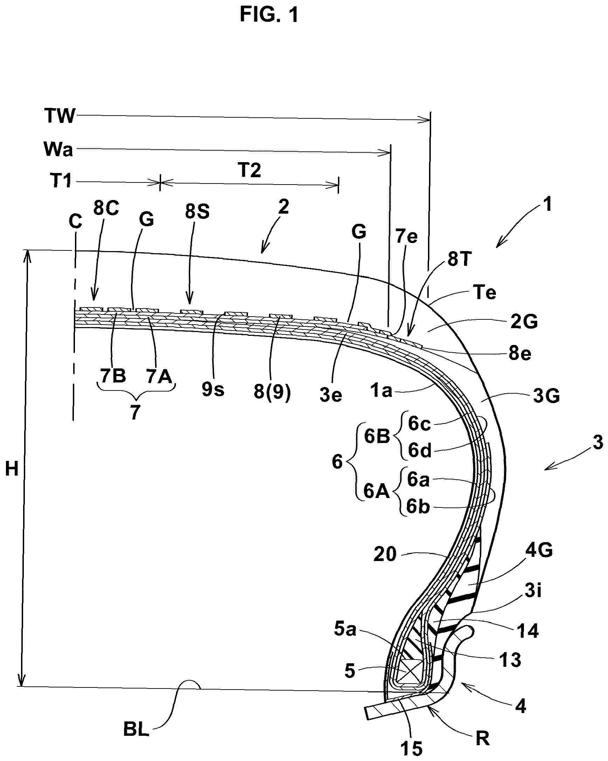

FIG. 1 is a tire meridian cross-sectional view of a right half of a tire 1 in a normal state, including a tire rotation axis (not shown), according to one embodiment of the present invention. In the present embodiment, the pneumatic tire 1 for a small truck is illustrated as a preferable mode. However, according to the present invention, the pneumatic tire 1 may be, for example, a pneumatic tire for a two-wheeled automotive vehicle or a passenger car, or a heavy duty pneumatic tire.

The "normal state" represents a state in which the tire 1 is mounted on a normal rim (hereinafter, may also be simply referred to as "rim") R, is inflated to a normal internal pressure, and is under no load. Hereinafter, unless otherwise specified, the dimensions of components of the tire 1, and the like represent values measured in the normal state.

The "normal rim" represents a rim R that is defined, in a standard system including a standard with which the tire 1 complies, by the standard for each tire, and is, for example, the "standard rim" in the JATMA standard, the "Design Rim" in the TRA standard, or the "Measuring Rim" in the ETRTO standard.

The "normal internal pressure" represents an air pressure that is defined, in a standard system including a standard with which the tire 1 complies, by the standard for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 of the present embodiment includes a tread portion 2, a pair of sidewall portions 3 disposed on both sides of the tread portion 2, and bead portions 4 disposed inward of the sidewall portions 3 in the tire radial direction and having bead cores 5 embedded therein.

In the present embodiment, the tire 1 includes a carcass 6, a belt layer 7, a band layer 8, and tread rubber 2G.

The carcass 6 is formed from at least one carcass ply. In the present embodiment, the carcass 6 is formed from two carcass plies 6A, 6B disposed on the inner side and the outer side in the tire radial direction. Each of the carcass plies 6A, 6B includes a carcass cord which is aligned so as to be titled relative to the tire equator C at, for example, an angle of 75 to 90°. For the carcass cord, for example, an organic fiber cord made of nylon, polyester, rayon, or the like is preferably used.

The carcass ply 6A includes a body portion 6a and a turned-up portion 6b, and the carcass ply 6B includes a body portion 6c and a turned-up portion 6d. Each of the body portions 6a, 6c is extended on and between the bead cores 5 and formed into a toroidal shape. The turned-up portions 6b, 6d are continuous with the body portions 6a, 6c, respectively, are turned up around the bead cores 5 from the inner side toward the outer side in the tire axial direction, and are raised outward in the tire radial direction and terminated.

The belt layer 7 is disposed inward of the tread portion 2 and outward of the carcass 6 in the tire radial direction. The belt layer 7 is formed from at least one belt ply. In the present embodiment, the belt layer 7 is formed from two belt plies 7A and 7B disposed on the inner side and the outer side in the tire radial direction. The belt plies 7A and 7B are each formed by, for example, an aligned body of belt cords being covered with topping rubber. The belt cord of the belt ply 7A and 7B is preferably a highly elastic cord such as a steel cord.

The inner and outer belt plies 7A, 7B are extended over almost the entire range of the tread portion 2 in the present embodiment. In the present embodiment, the inner belt ply 7A has a width greater than a width of the outer belt ply 7B in the tire axial direction. An outer end 7e of the belt layer 7 in the tire axial direction is disposed, for example, near a tread end Te. The maximum width Wa of the belt layer 7 in the tire axial direction is preferably 80% to 95% of a tread width TW. The belt layer 7 is not limited thereto. For example, the inner belt ply 7A may have a width less than a width of the outer belt ply 7B in the tire axial direction.

In the present embodiment, the band layer 8 is disposed inward of the tread portion 2 and outward of the belt layer 7 in the tire radial direction. In the present embodiment, the band layer 8 is disposed between the belt layer 7 and the tread rubber 2G. The band layer 8 is, for example, disposed such that an outer end 8e of the band layer 8 in the tire axial direction is disposed tire-axially outward of the outer end 7e of the belt layer 7 in the tire axial direction. The band layer 8 having such a structure exhibits a high holding force for holding the belt layer 7.

In the present embodiment, the band layer 8 includes a crown portion 8C that includes the tire equator C, shoulder portions 8S disposed outward of both outer sides of the crown portion 8C, and end portions 8T disposed outward of the shoulder portions 8S. For example, the crown portion 8C extends from the tire equator C toward both sides in the tire axial direction, and has a width T1, in the tire axial direction, which is 20% to 60% of the tread width TW. In the present embodiment, each shoulder portion 8S is adjacent to the crown portion 8C, and has a width T2, in the tire axial direction, which is 20% to 40% of the tread width TW. For example, the end portions 8T are adjacent to the shoulder portions 8S, respectively, and are formed so as to cover the outer ends 7e of the belt layer 7 in the tire axial direction.

The "tread width TW" is the length, in the tire axial direction, between the tread ends Te which are the outermost ground-contact positions, on both outer sides, in the tire axial direction in a normal load applied state in which a normal load is applied to the tire 1 in the normal state and the tire is brought into contact with a flat surface at a camber angle of 0°.

The "normal load" represents a load that is defined, in a standard system including a standard with which the tire complies, by the standard for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

The band layer 8 is formed from at least one band ply. In the present embodiment, the band layer 8 is formed by a band ply 9 being helically wound on the outer side, in the tire radial direction, of the belt layer 7. The band layer 8 having such a structure forms a so-called jointless structure having no joints. Therefore, the band layer 8 firmly and assuredly holds the belt layer 7, to inhibit lifting of the belt layer 7.

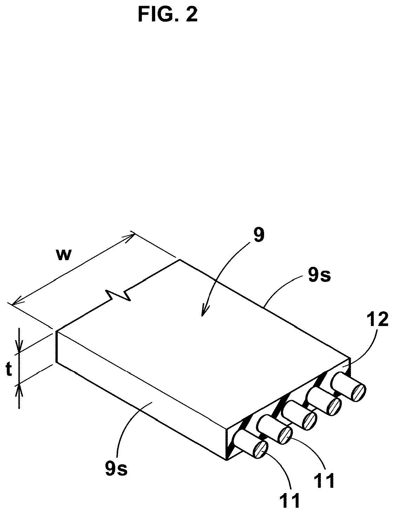

FIG. 2 is a perspective view of the band ply 9. As shown in FIG. 2, the band ply 9 of the present embodiment is formed by a plurality of band cords 11 being aligned and covered with topping rubber 12. In the present embodiment, the band ply 9 has a band-like shape having a long length and a small width. For example, a width w of the band ply 9 in the direction orthogonal to the longitudinal direction of the band ply 9 is preferably about 3.0 to 15.0 mm. For example, a thickness t of the band ply 9 is preferably about 1.0 to 3.0 mm.

For the band cords 11 of the band ply 9, for example, organic fiber cords made of nylon, rayon, aromatic polyamide, PEN, or the like are preferably used. In the present embodiment, the band cords 11 extend substantially in the tire circumferential direction, and an angle of the band cord 11 relative to the tire circumferential direction is preferably not greater than 5 degrees and more preferably not greater than 2 degrees.

As the topping rubber 12 of the band ply 9, rubber having a complex elastic modulus E*1 and a loss tangent tanδ1 such that shearing force between the band cords 11, 11 can be reduced and absorbed while preferably maintaining adhesion to the band cords 11, is preferably used.

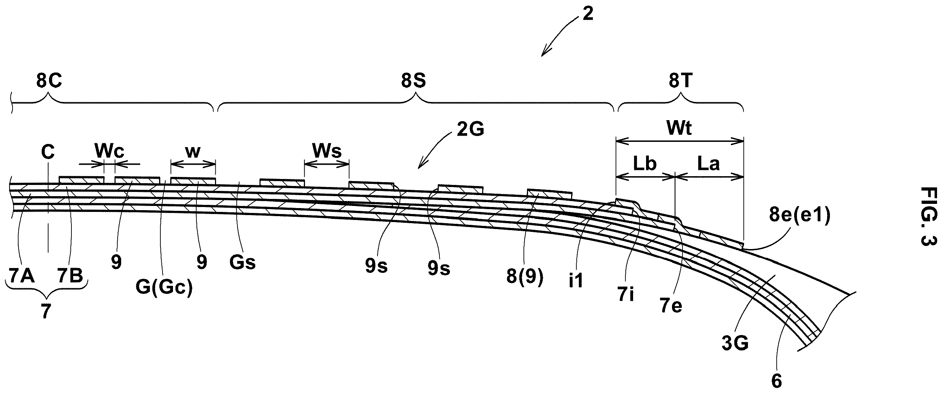

FIG. 3 is an enlarged view of the tread portion 2 shown in FIG. 1. As shown in FIG. 3, in the crown portion 8C and the shoulder portions 8S, the band layer 8 of the present embodiment is formed so as to include the band ply 9 disposed so as to be aligned in the tire axial direction, and gaps G over which side edges 9s, 9s, of the band ply 9, adjacent to each other in the tire axial direction are spaced from each other. Such gaps G allow reduction of the number of the band cords 11 arranged in the tire 1, and thus allow improvement of flat spot resistance performance. The gaps G are filled with, for example, the tread rubber 2G.

In the present embodiment, a width Wc, in the tire axial direction, of a gap Gc in the crown portion 8C is less than a width Ws, in the tire axial direction, of a gap Gs in the shoulder portions 8S. Thus, the belt layer 7 can be held in a relatively large region near the tire equator C in which lifting is made great. Furthermore, for example, the number of the band cords 11 at the shoulder portions 8S of the band layer 8 in which a high lateral force is likely to occur during cornering, is relatively reduced, thereby inhibiting heat generation in the cords. Therefore, in the present embodiment, the tire 1 allows high-speed durability performance and flat spot resistance performance to be improved in a well-balanced manner.

In order to effectively exhibit such an effect, the width Wc of the gap Gc in the crown portion 8C is preferably 1.5% to 5% of the tread width TW. The width Ws of the gap Gs in the shoulder portion 8S is preferably greater than 5% of the tread width TW and preferably not greater than 10% of the tread width TW. When the width Wc of the gap Gc is less than 1.5% of the tread width TW, and the width Ws of the gap Gs is not greater than 5% of the tread width TW, flat spot resistance performance may be degraded. When the width Wc of the gap Gc is greater than 5% of the tread width TW, and the width Ws of the gap Gs is greater than 10% of the tread width TW, lifting of the belt layer 7 cannot be inhibited, and high-speed durability performance may be degraded.

The end portions 8T of the band layer 8 are wound such that portions, of the band ply 9, which are adjacent to each other in the tire axial direction contact with each other. Thus, at the outer end 7e of the belt layer 7 in which lifting is more likely to occur, a holding force of the band ply 9 can be increased, thereby further improving high-speed durability performance. In the present embodiment, the end portions 8T are formed such that the side edges 9s, 9s, of the band ply 9, which are adjacent to each other contact with each other. In such a mode, lifting can be inhibited without excessively increasing the number of the band cords 11. The end portions 8T are not limited thereto. For example, portions, of the band ply 9, which are adjacent to each other may overlap each other in the tire radial direction.

An outer end e1 (that is, the outer end 8e of the band layer 8 in the tire axial direction) of each end portion 8T in the tire axial direction is preferably disposed tire-axially outward of the outer end 7e of the belt layer 7 in the tire axial direction. An inner end i 1 of each end portion 8T in the tire axial direction is preferably disposed tire-axially inward of the outer end 7e of the belt layer 7 in the tire axial direction, and, in the present embodiment, is disposed tire-axially inward of an outer end 7i of the outer belt ply 7B in the tire axial direction. Thus, lifting can be more effectively inhibited.

For example, a distance La, in the tire axial direction, over which the outer end e1 of the end portion 8T and the outer end 7e of the belt layer 7 are spaced from each other is preferably about 5 to 15 mm. Furthermore, for example, a distance Lb, in the tire axial direction, over which the inner end i1 of the end portion 8T and the outer end 7e of the belt layer 7 are spaced from each other is preferably greater than 5 mm and preferably not greater than 25 mm. When the distance La is greater than 15 mm or the distance Lb is greater than 25 mm, flat spot resistance performance may be degraded.

In order to effectively exhibit the above-described effect, a width Wt, in the tire axial direction, of the end portion 8T is preferably greater than 20 mm and more preferably not less than 25 mm, and preferably not greater than 35 mm and more preferably not greater than 30 mm.

In a tread ground-contact surface (not shown) in the normal load applied state, an area A1 of the band layer 8 in the tread ground-contact surface is preferably 60% to 85% of an area A2 of the belt layer 7 in the tread ground-contact surface. When the area A1 is less than 60% of the area A2, the gap G is excessively increased, and high-speed durability performance may be degraded. When the area A1 is greater than 85% of the area A2, the gap G is excessively reduced, and heat generation in the band cords 11 is increased, so that flat spot resistance performance may be degraded.

As shown in FIG. 1, for example, each bead core 5 of the present embodiment includes an outer surface 5a disposed on the outermost side in the tire radial direction, and has a rectangular cross-section. The bead core 5 is not limited thereto. For example, the bead core 5 may be formed so as to have a hexagonal cross-section or a round cross-section. For example, the bead core 5 is formed by a steel bead wire (not shown) being wound in multiple lines over multiple stages.

In the present embodiment, the tire 1 further includes sidewall rubber 3G, clinch rubber 4G, bead apexes 13, outer apexes 14, and chafers 15.

In the present embodiment, the sidewall rubber 3G is disposed outward of the carcass 6 in each sidewall portion 3, and forms the outer side surface of the sidewall portion 3. The sidewall rubber 3G is disposed such that an outer end 3e of the sidewall rubber 3G in the tire radial direction is disposed between the belt layer 7 and the carcass 6 in the present embodiment.

In the present embodiment, the clinch rubber 4G is disposed tire-axially outward of the turned-up portion 6b of the carcass 6 in the bead portion 4, and forms the outer side surface of the bead portion 4. In the present embodiment, the clinch rubber 4G is connected to an inner end 3i of the sidewall rubber 3G in the tire radial direction. The clinch rubber 4G contacts with a rim R when the tire 1 is mounted on the rim R.

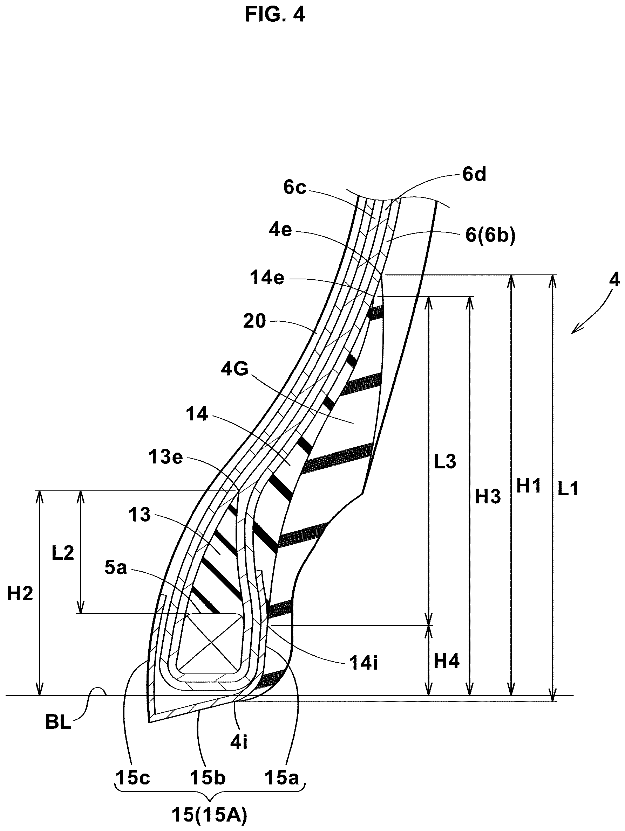

FIG. 4 is an enlarged view of the bead portion 4. As shown in FIG. 4, a height H1, in the tire radial direction, from a bead base line BL to an outer end 4e of the clinch rubber 4G in the tire radial direction, is preferably 25% to 45% of the a tire cross-sectional height H. A length L1 of the clinch rubber 4G in the tire radial direction is preferably 25% to 50% of the tire cross-sectional height H.

A complex elastic modulus E*2 of the clinch rubber 4G is preferably 5 to 25 MPa. Thus, bending of the bead portion 4 is inhibited, and heat generation due to deformation is inhibited. For example, a loss tangent tanδ2 of the clinch rubber 4G is preferably 0.05 to 0.20.

In the description herein, the complex elastic modulus E* and the loss tangent tanδ of the rubber represent values measured, by using a viscoelasticity spectrometer manufactured by Iwamoto Seisakusho, in compliance with the standards of JIS-K6394, under the following conditions.
Initial strain: 10%
Amplitude: ±2%
Frequency: 10 Hz
Deformation mode: tension
Measurement temperature: 70°C

In the present embodiment, the bead apex 13 is disposed between the body portion 6c and the turned-up portion 6d of the outer carcass ply 6B, and has an almost triangular cross-section that is tapered outward from the outer surface 5a of the bead cores 5 in the tire radial direction.

The bead apex 13 is formed by a rubber composition being crosslinked. A base rubber of the rubber composition is preferably diene rubber. Preferable examples of the diene rubber include natural rubber (NR), polyisoprene (IR), polybutadiene (BR), acrylonitrile-butadiene copolymer (NBR), and polychloroprene (CR). As the base rubber, two or more kinds of rubbers among them may be used in combination.

The rubber composition of the bead apex 13 contains a reinforcing agent. For example, the reinforcing agent is preferably carbon black. For the bead apex 13, in addition to or instead of carbon black, silica may be used. Thus, heat generation in the bead portion 4 can be inhibited. An amount of the reinforcing agent is preferably not less than 5 parts by mass and preferably not greater than 50 parts by mass per 100 parts by mass of the base rubber. Thus, stiffness of the bead portion 4 can have a value within a preferable range.

For example, a crosslinking agent, a softener, stearic acid, zinc oxide, an anti-aging agent, wax, a crosslinking activator, or the like is added to the rubber composition of the bead apex 13 as appropriate.

For example, a length L2 of the bead apex 13 in the tire radial direction is preferably 2.5% to 5% of the tire cross-sectional height H. When the length L2 of the bead apex 13 is not greater than 5% of the tire cross-sectional height H, the turned-up portion 6b of the carcass 6 which extends along the bead apex 13 can be disposed on the inner side in the tire axial direction, whereby distortion acting on the carcass 6 during running can be inhibited. When the length L2 of the bead apex 13 is not less than 2.5% of the tire cross-sectional height H, lateral stiffness of the bead portion 4 can be kept high.

In order to effectively exhibit the above-described effect, a height H2 in the tire radial direction from the bead base line BL to an outer end 13e of the bead apex 13 in the tire radial direction is preferably 10% to 30% of the tire cross-sectional height H.

A complex elastic modulus E*3 of the bead apex 13 is preferably 2 to 5 times the complex elastic modulus E*2 of the clinch rubber 4G. For example, the complex elastic modulus E*3 of the bead apex 13 is preferably 20 to 50 MPa. A loss tangent tanδ3 of the bead apex 13 is preferably 1 to 4 times the loss tangent tanδ2 of the clinch rubber 4G. For example, the loss tangent tanδ3 of the bead apex 13 is preferably 0.10 to 0.20. The bead apex 13 having such a structure allows the lateral stiffness of the bead portion 4 to be kept high and allows heat generation due to deformation during running to be inhibited.

In the present embodiment, the outer apex 14 is disposed outward of the bead apex 13 in the tire axial direction, and is formed between the clinch rubber 4G and the turned-up portion 6b of the carcass 6. For example, the outer apex 14 projects inward in the tire axial direction, and has a width, in the tire axial direction, which is gradually reduced toward both sides in the tire radial direction.

In the present embodiment, an inner end 14i of the outer apex 14 in the tire radial direction is disposed tire-radially outward of the inner end of the clinch rubber 4G. The inner end 14i of the outer apex 14 in the tire radial direction is, for example, disposed tire-radially inward of the outer surface 5a of the bead core 5. In the present embodiment, an outer end 14e of the outer apex 14 in the tire radial direction is disposed tire-radially inward of the outer end 4e of the clinch rubber 4G. The outer apex 14 having such a structure allows distortion acting on the carcass 6 to be effectively reduced, and allows the lateral stiffness of the bead portion 4 to be enhanced, thereby improving high-speed durability performance and flat spot resistance performance.

For example, a height H3 in the tire radial direction from the bead base line BL to the outer end 14e of the outer apex 14 is preferably 15% to 45% of the tire cross-sectional height H. For example, a height H4 in the tire radial direction from the bead base line BL to the inner end 14i of the outer apex 14 is preferably 3% to 10% of the tire cross-sectional height H. A length L3, in the tire radial direction, of the outer apex 14 is preferably 10% to 40% of the tire cross-sectional height H.

The outer apex 14 is formed by a rubber composition being crosslinked. A base rubber of the rubber composition is preferably diene rubber. As the diene rubber, natural rubber (NR), polyisoprene (IR), polybutadiene (BR), acrylonitrile-butadiene copolymer (NBR), or polychloroprene (CR) is preferably used. As the base rubber, two or more kinds of rubbers among them may be used in combination.

The rubber composition of the outer apex 14 contains a reinforcing agent. For example, the reinforcing agent is preferably carbon black. For the outer apex 14, in addition to or instead of carbon black, silica may be used. Thus, heat generation in the bead portion 4 can be inhibited. An amount of the reinforcing agent is preferably not less than 5 parts by mass and preferably not greater than 50 parts by mass per 100 parts by mass of the base rubber. Thus, stiffness of the bead portion 4 can have a value within a preferable range.

For example, a crosslinking agent, a softener, stearic acid, zinc oxide, an anti-aging agent, wax, a crosslinking activator, or the like is added to the rubber composition of the outer apex 14 as appropriate.

For example, a complex elastic modulus E*4 of the outer apex 14 is preferably 20 to 50. For example, a loss tangent tanδ4 of the outer apex 14 is preferably 0.10 to 0.20. A ratio (E*4/E*3) of the complex elastic modulus E*4 of the outer apex 14 to the complex elastic modulus E*3 of the bead apex 13 is preferably 0.8 to 1.25. A ratio (tanδ4/tanδ3) of the loss tangent tanδ4 of the outer apex 14 to the loss tangent tanδ3 of the bead apex 13 is preferably 0.8 to 1.25.

The chafer 15 is formed from a layer of at least one steel cord ply. In the present embodiment, the chafer 15 is formed from a layer of one steel cord ply 15A. The chafer 15 having such a structure allows enhancement of bending rigidity of the bead portion 4 and eventually allows effective inhibition of great bending deformation of the bead portion 4 toward the outer side in the tire axial direction as is caused by the bead core 5 serving as a pivot. The steel cord ply 15A is, for example, formed by steel cords aligned in parallel with each other being covered with topping rubber (not shown).

The chafer 15 extends outside the bead core 5 so as to form an almost U-shape. In the present embodiment, the chafer 15 includes, for example, a first portion 15a, a second portion 15b, and a third portion 15c. In the present embodiment, the first portion 15a extends in the tire radial direction between the turned-up portion 6b, and the clinch rubber 4G and the outer apex 14. In the present embodiment, the second portion 15b is continuous with the inner end of the first portion 15a, and extends in the tire axial direction in a portion inward of the bead core 5 in the tire radial direction. In the present embodiment, the third portion 15c is continuous with the second portion 15b, and extends in the tire radial direction in a portion inward of the bead core 5 in the tire axial direction. In the present embodiment, the second portion 15b and the third portion 15c contact with the rim R. The chafer 15 having such a structure allows enhancement of stiffness of the bead portion 4 and improvement of high-speed durability performance.

In the present embodiment, the tire 1 includes an inner liner 20 that forms an inner side of the carcass 6 in the tire axial direction and forms an inner cavity surface 1a (shown in FIG. 1) of the tire 1, and that is formed from rubber that does not allow air permeation. In the present embodiment, the inner liner 20 is disposed outward of the third portion 15c of the chafer 15 in the tire radial direction.

Although the embodiments of the present invention have been described above in detail, the present invention is not limited to the illustrated embodiments, and, needless to say, various modifications can be made to practice the present invention.

### [Examples]

Pneumatic tires having the basic structure shown in FIG. 1 and based on the specifications indicated in Table 1 were produced. Each tire was tested for high-speed durability performance and flat spot resistance performance. Common specifications to the tires and a testing method for the tires are indicated below.
Tire size: 225/75R16C 118/116R
Rim: 16×6.0J
Wa/TW: 95 (%)
T1/TW: 35 (%)
T2/TW: 25 (%)

### <High-speed durability performance>

A speed (km/h) at which each tire was damaged was measured, with the specifications indicated below, in compliance with the standards of ECE30. The result is indicated as indexes with the speed in comparative example 1 being 100. The greater the value is, the more excellent high-speed durability performance is.
Load: 18.75 kN
Internal pressure: 525 kPa

### <Flat spot resistance performance>

An initial radial force variation (RFV) of each tire was measured in compliance with the uniformity test condition of JASO C607. This measured value was F0. Next, running with the tire was performed by using a drum tester at the speed of 60 km/h with the following specifications. Next, the tire was made stationary with the same specifications as the specifications during the running, and left as it was for 16 hours. By the tire being left as it was, a flat spot was generated in the tire. Next, an RFV at the time of generation of the flat spot was measured, for the tire in which the flat spot was generated, in compliance with the above-described test condition. This measured value was F1. An amount of the generation of the flat spot was calculated by subtracting F1 from F0. The result is indicated as indexes with an amount of the generation of the flat pot in comparative example 1 being 100. The less the value is, the more excellent flat spot resistance performance is.
Load: 18.75 kN
Internal pressure: 525 kPa
Running time: one hour

The results of the test and the like are indicated in Table 1.

**[Table 1]**

| | Comp. example 1 | Comp. example 2 | Example 1 | Example 2 | Example 3 | Example 4 | Example 5 | Comp. example 3 |
|---|---|---|---|---|---|---|---|---|
| Gc/TW (%) | 10 | 1.5 | 3 | 3 | 3 | 3 | 3 | 0 |
| Gs/TW (%) | 10 | 1.5 | 8 | 8 | 8 | 8 | 8 | 0 |
| Wt (mm) | 25 | 25 | 25 | 20 | 40 | 25 | 25 | 25 |
| La (mm) | 10 | 10 | 10 | 5 | 15 | 10 | 10 | 10 |
| L2/H (%) | 15 | 15 | 15 | 15 | 15 | 30 | 15 | 15 |
| L3/H (%) | 35 | 35 | 35 | 35 | 35 | 35 | 55 | 35 |
| A1/A2 (%) | 60 | 90 | 75 | 75 | 75 | 75 | 75 | 105 |
| High speed durability performance [Index The greater the value is, the better the performance is.] | 100 | 110 | 115 | 110 | 113 | 110 | 113 | 115 |
| Flat spot resistance performance [Index The less the value is, the better the performance is.] | 100 | 120 | 90 | 87 | 95 | 90 | 95 | 130 |

According to the result of the test, it was confirmed that high-speed durability performance and flat spot resistance performance were improved in the tires of the examples as compared to the tires of the comparative examples. Furthermore, it was understood that the mass of each tire and production cost were reduced for the tires of the examples as compared to the tires of the comparative examples. The test was conducted by changing T1 and T2 within a preferable range. The same results were obtained.

High-speed durability performance and flat spot resistance performance are improved.

Provided is a tire 1 including a carcass 6, a belt layer 7, and a band layer 8. The band layer 8 is formed by helically winding a band ply 9 having a band cord 11 covered with topping rubber 12, and includes a gap G over which side edges 9s, 9s, of the band ply 9, adjacent to each other in a tire axial direction are spaced from each other. The band layer 8 includes a crown portion 8C that includes a tire equator C, and shoulder portions 8S, 8S disposed outward of both outer sides of the crown portion 8C. A width, in the tire axial direction, of a gap Gc in the crown portion 8C is less than a width, in the tire axial direction, of a gap Gs in the shoulder portions 8S.

## Claims

1. A tire (1) comprising:
a carcass (6) having a toroidal shape;
a belt layer (7) disposed inward of a tread portion (2) and outward of the carcass (6) in a tire radial direction; and
a band layer (8) disposed inward of the tread portion (2) and outward of the belt layer (7) in the tire radial direction, wherein
the band layer (8) is formed by helically winding a band ply (9) in which at least one band cord (11) is covered with topping rubber (12), and the band layer (8) includes a gap (G) over which side edges (9s, 9s), of the band ply (9), adjacent to each other in a tire axial direction are spaced from each other,
the band layer (8) includes a crown portion (8C) that includes a tire equator (C), and a pair of shoulder portions (8S, 8S) disposed outward of both outer sides of the crown portion (8C),
a width (Wc), in the tire axial direction, of the gap (Gc) in the crown portion (8C) is less than a width (Ws), in the tire axial direction, of the gap Gs in the shoulder portions (8S),
the band layer (8) has end portions (8T, 8T) that are disposed outward of both outer sides of the paired shoulder portions (8S, 8S),
**characterized in that**
the end portions (8T, 8T) cover outer ends (7e) of the belt layer (7) in the tire axial direction, and
are wound such that adjacent portions, in the tire axial direction, of the band ply (9) are in contact with each other.

2. The tire (1) according to claim 1, wherein a width (Wt) of each end portion (8T) in the tire axial direction is greater than 20 mm.

3. The tire (1) according to claim 1 or 2, wherein the width (Wc), in the tire axial direction, of the gap (Gc) in the crown portion (8C) is 1.5% to 5% of a tread width (TW).

4. The tire (1) according to any one of claims 1 to 3, wherein the width (Ws), in the tire axial direction of the gap (Gs) in the shoulder portions (8S) is greater than 5% of the tread width (TW) and not greater than 10% of the tread width (TW).

5. The tire (1) according to any one of claims 1 to 4, wherein
on a tread ground-contact surface in a normal load applied state in which the tire (1) is mounted on a normal rim (R), the tire (1) is inflated to a normal internal pressure, and the tire (1) is in contact with a flat surface at a camber angle of 0 degrees under a normal load,
an area of the band layer (8) in the tread ground-contact surface is 60% to 85% of an area of the belt layer (7) in the tread ground-contact surface.

## Patentansprüche

1. Reifen (1), der Folgendes aufweist:
eine Karkasse (6) mit einer toroidalen Form;
eine Gürtelschicht (7), die innerhalb eines Laufflächenabschnitts (2) und außerhalb der Karkasse (6) in einer Reifenradialrichtung angeordnet ist; und
eine Bandschicht (8), die in der Reifenradialrichtung innerhalb des Laufflächenabschnitts (2) und außerhalb der Gürtelschicht (7) angeordnet ist, wobei
die Bandschicht (8) durch spiralförmiges Wickeln einer Bandlage (9) gebildet wird, in der mindestens ein Bandkord (11) mit Abdeckgummi (12) bedeckt ist, und die Bandschicht (8) einen Spalt (G) aufweist, über den Seitenränder (9s, 9s) der Bandlage (9), die in einer Reifenaxialrichtung nebeneinander liegen, voneinander beabstandet sind,
die Bandschicht (8) einen Kronenabschnitt (8C), der einen Reifenäquator (C) umfasst, und ein Paar Schulterabschnitte (8S, 8S) aufweist, die auswärts von beiden Außenseiten des Kronenabschnitts (8C) angeordnet sind,
eine Breite (Wc) des Spalts (Gc) in dem Kronenabschnitt (8C) in der axialen Richtung des Reifens kleiner ist als eine Breite (Ws) des Spalts (Gs) in den Schulterabschnitten (8S) in der Reifenaxialrichtung,
die Bandschicht (8) Endabschnitte (8T, 8T) aufweist, die von beiden Außenseiten der gepaarten Schulterabschnitte (8S, 8S) auswärts angeordnet sind,
**dadurch gekennzeichnet, dass**
die Endabschnitte (8T, 8T) äußere Enden (7e) der Gürtelschicht (7) in der Reifenaxialrichtung abdecken, und
so gewickelt sind, dass in Reifenaxialrichtung benachbarte Abschnitte der Bandlage (9) miteinander in Kontakt sind.

2. Reifen (1) nach Anspruch 1, wobei eine Breite (Wt) jedes Endabschnitts (8T) in der Reifenaxialrichtung größer als 20 mm ist.

3. Reifen (1) nach Anspruch 1 oder 2, wobei die Breite (Wc) des Spaltes (Gc) im Kronenbereich (8C) in der Reifenaxialrichtung 1,5% bis 5% einer Laufflächenbreite (TW) beträgt.

4. Reifen (1) nach einem der Ansprüche 1 bis 3, wobei die Breite (Ws) des Spalts (Gs) in den Schulterabschnitten (8S) in der Reifenaxialrichtung größer als 5% der Laufflächenbreite (TW) und nicht größer als 10% der Laufflächenbreite (TW) ist.

5. Reifen (1) nach einem der Ansprüche 1 bis 4, wobei
auf einer Laufflächenbodenkontaktfläche in einem normal belasteten Zustand, in dem der Reifen (1) auf eine normale Felge (R) aufgezogen ist, der Reifen (1) auf einen normalen Innendruck aufgepumpt ist und der Reifen (1) unter einer normalen Belastung in Kontakt mit einer flachen Oberfläche mit einem Sturzwinkel von 0 Grad steht,
ein Bereich der Bandschicht (8) in der Laufflächenbodenkontaktfläche 60% bis 85% eines Bereichs der Gürtelschicht (7) in der Laufflächenbodenkontaktfläche beträgt.

## Revendications

1. Pneumatique (1) comprenant :
une carcasse (6) ayant une forme toroïdale ;
une couche de ceinture (7) disposée vers l'intérieur d'une partie de bande de roulement (2) et vers l'extérieur de la carcasse (6) dans la direction radiale du pneu ; et
une couche de bande (8) disposée vers l'intérieur de la partie de bande de roulement (2) et vers l'extérieur de la couche de ceinture (7) dans la direction radiale du pneu, dans lequel :
la couche de bande (8) est formée en enroulant de manière hélicoïdale, un pli de bande (9) dans lequel au moins un câble de bande (11) est recouvert avec un caoutchouc de gommage (12), et la couche de bande (8) comprend un espace (G) sur lequel les bords latéraux (9s, 9s) du pli de bande (9), adjacents entre eux dans une direction axiale du pneu sont espacés les uns des autres,
la couche de bande (8) comprend une partie de sommet (8C) qui comprend un équateur de pneu (C) et une paire de parties d'épaulement (8S, 8S) disposées vers l'extérieur des deux côtés externes de la partie de sommet (8C),
une largeur (Wc), dans la direction axiale du pneu, de l'espace (Gc) dans la partie de sommet (8C) est inférieure à une largeur (Ws) dans la direction axiale du pneu, de l'espace Gs dans les parties d'épaulement (8S),
la couche de bande (8) a des parties d'extrémité (8T, 8T) qui sont disposées vers l'extérieur des deux côtés externes des parties d'épaulement en paire (8S, 8S),
**caractérisé en ce que** :
les parties d'extrémité (8T, 8T) recouvrent les extrémités externes (7e) de la couche de ceinture (7) dans la direction axiale du pneu, et
sont enroulées de sorte que les parties adjacentes, dans la direction axiale du pneu, du pli de bande (9) sont en contact entre elles.

2. Pneumatique (1) selon la revendication 1, dans lequel une largeur (Wt) de chaque partie d'extrémité (8T) dans la direction axiale du pneu est supérieure à 20 mm.

3. Pneumatique (1) selon la revendication 1 ou 2, dans lequel la largeur (Wc), dans la direction axiale du pneu, de l'espace (Gc) dans la partie de sommet (8C) représente de 1,5% à 5% d'une largeur de bande de roulement (TW).

4. Pneumatique (1) selon l'une quelconque des revendications 1 à 3, dans lequel la largeur (Ws), dans la direction axiale du pneu de l'espace (Gs) dans les parties d'épaulement (8S), est supérieure à 5% de la largeur de bande de roulement (TW) et non supérieure à 10% de la largeur de bande de roulement (TW).

5. Pneumatique (1) selon l'une quelconque des revendications 1 à 4, dans lequel :
sur la surface de contact avec le sol de bande de roulement dans un état appliqué à charge normale dans lequel le pneu (1) est monté sur une jante (R) normale, le pneu (1) est gonflé à une pression interne normale, et le pneu (1) est en contact avec une surface plate à un angle de cambrure de 0 degré sous une charge normale,
une surface de la couche de bande (8) dans la surface de contact avec le sol de bande de roulement représente de 60% à 85% d'une surface de la couche de ceinture (7) dans la surface de contact avec le sol de bande de roulement.
